(19) Europäisches Patentamt
European Patent Office
Office européen des brevets

(11) EP 4 144 813 A1

(12) # EUROPEAN PATENT APPLICATION
published in accordance with Art. 153(4) EPC

(43) Date of publication:
**08.03.2023 Bulletin 2023/10**

(21) Application number: **21795862.8**

(22) Date of filing: **27.04.2021**

(51) International Patent Classification (IPC):
***C09J 107/02*** *(2006.01)* ***C09J 109/00*** *(2006.01)*
***C09J 109/08*** *(2006.01)* ***C09J 163/00*** *(2006.01)*
***C09J 175/04*** *(2006.01)* ***D06M 13/395*** *(2006.01)*
***D06M 15/37*** *(2006.01)* ***D06M 15/55*** *(2006.01)*
***D06M 15/564*** *(2006.01)* ***D06M 15/59*** *(2006.01)*
***D06M 15/693*** *(2006.01)* ***B60C 9/00*** *(2006.01)*

(52) Cooperative Patent Classification (CPC):
**B60C 9/00; C09J 107/02; C09J 109/00; C09J 109/08; C09J 163/00; C09J 175/04; D06M 13/395; D06M 15/37; D06M 15/55; D06M 15/564; D06M 15/59; D06M 15/693**

(86) International application number:
**PCT/JP2021/016853**

(87) International publication number:
**WO 2021/221075 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2020 JP 2020080684**

(71) Applicant: **BRIDGESTONE CORPORATION**
**Chuo-ku**
**Tokyo 104-8340 (JP)**

(72) Inventors:
- **ONOUE, Shingo**
  **Tokyo 104-8340 (JP)**
- **NAKAMURA, Masaaki**
  **Tokyo 104-8340 (JP)**

(74) Representative: **Marks & Clerk LLP**
**15 Fetter Lane**
**London EC4A 1BW (GB)**

(54) **ADHESIVE COMPOSITION FOR ORGANIC FIBER CORD, RUBBER-ORGANIC FIBER CORD COMPOSITE, AND TIRE**

(57) The present disclosure provides: an adhesive composition capable of realizing good adhesion even when neither resorcin nor formalin is included therein; and a rubber-organic fiber cord composite and a tire, which are excellent in adhesion between rubber and organic fiber cords and make a low impact on the environment. Specifically, the present invention provides an adhesive composition for an organic fiber cord, comprising therein: an epoxy compound (A); a compound (B) having an amide group and an amino group per molecule; and rubber latex (C). Further, the present disclosure provides a rubber-organic fiber cord composite, comprising a rubber member and an organic fiber cord, wherein at least a portion of the organic fiber cord is coated with the adhesive composition described above.

EP 4 144 813 A1

## Description

TECHNICAL FIELD

The present invention relates to an adhesive composition for an organic fiber cord, a rubber-organic fiber cord composite, and a tire.

BACKGROUND ART

There is a conventionally known technique for obtaining good adhesion between a tire cord made of polyester fibers or the like and a rubber composition for a tire, which technique uses an RFL (resorcin-formalin-latex) adhesive containing resorcin, formalin, and latex and ensures good adhesion between the tire cord and the rubber composition by thermally curing the RFL adhesive (PTLs 1-3).

Further, there are other relevant known techniques for adhesive compositions in the prior art, which techniques aim at improving adhesion between the tire cord and the rubber composition by using a resorcin-formalin resin obtained by initial condensation of resorcin and formalin (PTLs 4, 5) or pretreating a tire cord made of polyester fibers or the like by an epoxy resin.

However, in this respect, there has been a demand in recent years for reducing an amount to be used of formalin generally employed as an important raw material for crosslinking resorcin in the adhesive compositions described above in consideration of safety in the working environment. Further, there has also been a similar demand for reducing an amount to be used of resorcin in terms of environmental safety/protection. In view of this, i) an adhesive composition for an organic fiber cord without containing resorcinol nor formalin for better environmental protection and ii) a rubber-reinforcing material, a tire and a bonding method respectively using the adhesive composition of i) have been proposed (PTL 6).

CITATION LIST

Patent Literature

PTL 1: JP58-002370 A(1983)
PTL2: JP60-092371 A(1985)
PTL 3: JP60-096674 A(1985)
PTL 4: JP63-249784 A(1988)
PTL 5: JP63-061433 B(1988)
PTL 6: JP2010-255153 A

SUMMARY OF THE INVENTION

(Technical Problem)

However, an adhesive composition not containing resorcin nor formalin as disclosed in PTL 6 is slow to cure and takes time for itself to dry. Further, the adhesive composition tends to firmly adhere to a curing device, thereby resulting in low productivity. The adhesive composition not containing resorcin nor formalin as disclosed in PTL 6 has therefore not been practically implemented.

Moreover, an adhesive composition, which is generally subjected to various types of mechanical loads in the process of attaching the adhesive composition to organic fiber cords, is required not to allow a component thereof to deposit after being subjected to the mechanical loads.

Yet further, an adhesive composition is required to have satisfactorily good storage stability (and satisfactorily long pot life, as well) because the adhesive force will be significantly affected if the manufactured adhesive composition deteriorates before its use.

In view of this, an object of the present disclosure is to solve the prior art problems described above and provide an adhesive composition for an organic fiber cord, having good adhesion even when neither resorcin nor formalin is included therein, making a low impact on the environment, and being excellent in mechanical stability and storage stability.

Further, another object of the present disclosure is to provide a rubber-organic fiber cord composite and a tire, which make a low impact on the environment and are excellent in productivity and adhesion between rubber and organic fiber cords.

(Solution to Problem)

The primary features of the present disclosure for achieving the aforementioned objects are as follows.
An adhesive composition for an organic fiber cord of the present disclosure characteristically contains an epoxy compound (A), a compound (B) having an amide group and an amino group per molecule, and rubber latex (C) therein.

(Advantageous Effect)

According to the present disclosure, it is possible to provide an adhesive composition for an organic fiber cord, having good adhesion even when neither resorcin nor formalin is included therein, making a low impact on the environment, and being excellent in mechanical stability and storage stability.
Further, according to the present disclosure, it is possible to provide a rubber-organic fiber cord composite and a tire, which make a low impact on the environment and are excellent in productivity and adhesion between rubber and organic fiber cords.

DETAILED DESCRIPTION

Hereinafter, an adhesive composition for an organic fiber cord, a rubber-organic fiber cord composite, and a tire of the present disclosure will be demonstratively described in detail based on embodiments thereof.

< Adhesive composition for organic fiber cord >

An adhesive composition for an organic fiber cord of the present disclosure characteristically contains an epoxy compound (A), a compound (B) having an amide group and an amino group per molecule, and rubber latex (C) therein.
The adhesive composition of the present disclosure does not use resorcin or formalin and therefore can reduce an impact on the environment thereof.
In short, the adhesive composition of the present disclosure employs an epoxy compound (A) and a compound (B) having an amide group and an amino group therein instead of resorcin and formalin. It is possible to improve adhesion between an organic fiber cord and rubber by treating the organic fiber cord with the adhesive composition of the present disclosure containing an epoxy compound (A), a compound (B) having an amide group and an amino group per molecule, and rubber latex (C) therein.
The adhesive composition of the present disclosure, in which the compound (B) having an amide group and an amino group therein stabilizes the dispersion state of the rubber latex (C), hardly allows a component of the composition to deposit even after being subjected to a mechanical load, thereby exhibiting superior mechanical stability. Further, the adhesive composition of the present disclosure, in which the compound (B) having an amide group and an amino group therein stabilizes the dispersion state of the rubber latex (C), exhibits satisfactory storage stability.
Accordingly, the adhesive composition for an organic fiber cord of the present disclosure can realize good adhesion even when neither resorcin nor formalin is included therein, makes a low impact on the environment, and is excellent in mechanical stability and storage stability thereof.

- Epoxy compound (A) -

The adhesive composition contains an epoxy compound (A). Various types of compounds, each of which has at least one epoxy group per molecule, can be employed as the epoxy compound (A). The epoxy compound (A) functions as a crosslinking agent in the adhesive composition and exhibits good adhesion, heat resistance, durability, strength, flexibility, electric insulation properties, and the like.
The epoxy compound (A), of which type is not particularly restricted, is preferably a compound having two or more epoxy groups per molecule and more preferably a compound having four or more epoxy groups per molecule thereof. An epoxy compound having two or more epoxy groups per molecule thereof can effectively function as a crosslinking agent due to the two or more epoxy groups, and an epoxy compound having four or more epoxy groups per molecule thereof can perform crosslinking more densely and achieve higher flexibility than otherwise.
The epoxy compound, of which type is not particularly restricted, preferably has 10 or less epoxy groups per molecule thereof. The crosslinking density will not be too high and a resulting crosslinked product will have satisfactory toughness in this case.
Specific examples of the epoxy compound (A) include a product obtained by a reaction between a polyhydric alcohol and epichlorohydrin, such as diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythrithiol polyglycidyl ether, diglycerol polyglycidyl

ether, sorbitol polyglycidyl ether, or the like. It is possible to further improve adhesion between an organic fiber cord and rubber by using any of the aforementioned compounds as the epoxy compound.

A content of the epoxy compound (A) in the adhesive composition in terms of the solid content mass ratio is preferably in the range of 1 to 25 mass % and more preferably in the range of 5 to 20 mass %. An effect caused by the epoxy compound (A) is made conspicuous when the content of the epoxy compound (A) is set to be within the ranges described above.

- Compound (B) having amide group and amino group therein -

The adhesive composition contains a compound (B) having an amide group and an amino group per molecule. The compound (B) having an amide group and an amino group therein causes an effect of improving storage stability (and possibly pot life, as well) and mechanical stability of the adhesive composition and also an effect of enhancing heat-resistant adhesion force between rubber and an organic fiber cord when the adhesive composition is provided on the organic fiber cord by coating.

The numbers of the amido group and the amino group per molecule of the compound (B) are not particularly restricted and each of the numbers may independently be set to be either one or two or more.

The compound (B) having an amide group and an amino group therein preferably has another hydrophilic site other than the amide group and the amino group. Examples of the hydrophilic site include carboxyl group, hydroxyl group, and the like. Presence of such another hydrophilic site as described above in the compound (B) having an amide group and an amino group therein improves stability (solubility/dispersibility) of the compound (B) in an aqueous solution of the adhesive compound.

Specific examples of the compound (B) having an amide group and an amino group therein include poly(amidoamine) and the like. The poly(amidoamine) can be manufactured by, for example, a dehydration condensation reaction in which an amine compound such as aliphatic amine, alicyclic amine, aromatic amine, aromatic aliphatic (araliphatic) amine, heterocyclic amine is caused to react with a carboxylic acid such as dimer acid.

The dehydration condensation of the poly(amidoamine) is preferably carried out by adding an excessive amount of the amine compound with respect to the carboxylic acid such as dimer acid because then active hydrogens reacting with other epoxide compounds are available. The theoretical active hydrogen equivalent weight (g/eq) is preferably $\geq$ 30 and more preferably $\geq$ 70 in this regard.

Examples of the aliphatic amine include alkylene polyamine, polyalkylene polyamine, alkylaminoalkylamine, and the like.

Examples of the alkylene polyamine include methylene diamine, ethylene diamine, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, trimethylhexamethylene diamine, and the like.

Examples of the polyalkylene polyamine include diethylenetriamine, dipropylenetriamine, triethylenetetramine, tripropylenetetramine, tetraethylene pentamine, tetrapropylenepentamine, pentaethylenehexamine, nonaethylenedecamine, bis(hexamethylene)triamine, and the like.

Examples of other aliphatic amines include tetra(aminomethyl)methane, tetrakis(2-aminoethylaminomethyl)methane, 1,3-bis(2'-aminoethylamino)propane, 2,2'-[ethylenebis(iminotrimethyleneimino)]bis(ethanamine), tris(2-aminoethyl)amine, bis(cyanoethyl)diethylenetriamine, polyoxyalkylenepolyamine, and the like.

Examples of the alicyclic amine include 1,3-bis(aminomethyl)cyclohexane, 1,4-cyclohexanediamine, 4,4'-methylenebis(cyclohexanamine), 4,4'-isopropylidenebis(cyclohexanamine), norbornane diamine, isophorone diamine, and the like.

Examples of the aromatic amine include phenylenediamine, naphthylenediamine, diaminodiphenylmethane, 2,2-bis(4-aminophenyl)propane, 4,4'-diaminodiphenyl ether, 4,4'-diaminobenzophenone, 4,4'-diaminodiphenyl sulfone, 4,4'-diamino-3,3'-dimethyldiphenylmethane, 2,4'-diaminobiphenyl, 2,3'-dimethyl-4,4'-diaminobiphenyl, 3,3'-dimethoxy-4,4'-diaminobiphenyl, and the like.

Examples of the aromatic aliphatic (araliphatic) amine include o-xylylenediamine, m-xylylenediamine, p-xylylenediamine, bis(aminomethyl)naphthalene, bis(aminoethyl)naphthalene, and the like.

Examples of the heterocyclic amine include N-methylpiperazine, morpholine, 1,4-bis-(3-aminopropyl)piperazine, 1,4-diazacycloheptane, 1-(2'-aminoethylpiperazine), 1-[2'-(2"-aminoethylamino)ethyl]piperazine, 1,11-diazacycloeicosane, 1, 15-diazacylcooctacosane, and the like.

Polyalkylene polyamine is preferable and normal triethylenetetramine and/or branched triethylenetetramine is particularly preferable among the aforementioned amines.

The dimer acid described above represents a dimer of unsaturated fatty acid, although the dimer acid generally includes a small amount of monomer or trimer, as well. A carboxylic acid, having preferably 12-24 carbon atoms (more preferably 16-18 carbon atoms) and one unsaturated bond/two or more unsaturated bonds per molecule, is preferable as the unsaturated fatty acid. Examples of such unsaturated fatty acid as described above include: fatty acid having one

unsaturated bond such as oleic acid, elaidic acid, cetoleic acid; fatty acid having two unsaturated bonds such as sorbic acid, linoleic acid; fatty acid having three or more unsaturated bonds such as linolenic acid, arachidonic acid; and the like.

Further, fatty acids derived from animals/plants may be used as the unsaturated fatty acid described above and examples thereof include soybean oil fatty acid, tall oil fatty acid, linseed oil fatty acid, and the like. A fatty acid derived from a plant is preferable and a dimer acid obtained from tall oil fatty acid is particularly preferable for use.

In the present disclosure, a "dimer acid" represents a dimer of unsaturated fatty acids resulted from dimerization (polymerization) of the acids and may include an esterified form thereof.

A commercially available polyaminoamide compound can be used as the compound (B) having an amide group and an amino group therein described above and examples thereof include "TXH-674-B", "TXH-685-A", "TXS-53-C", "TXH-694" manufactured by T & K TOKA Co., Ltd., "Sunmide® 153-60S" manufactured by Evonik Industries AG, "jERCURE™ WD11M60" manufactured by Mitsubishi Chemical Corporation, "ADEKA HARDNER EH-2300", "ADEKA HARDNER EH-4602", "ADEKA HARDNER EH-3427A", "ADEKA HARDNER EH-4023W", "ADEKA HARDNER EH-4163X" manufactured by ADEKA Corporation, "DAITOCURAR®X-6102" manufactured by DAITO SANGYO Co., Ltd., "Beckopox EH613W/80WA", "Beckopox EH661" manufactured by DAICEL-ALLNEX LTD., and the like.

A content of the compound (B) having an amide group and an amino group therein in the adhesive composition in terms of the solid content mass ratio is preferably in the range of 0.1 to 20 mass % and more preferably in the range of 1 to 15 mass %. An effect caused by the compound (B) having an amide group and an amino group therein is made conspicuous when the content of the compound (B) is set to be within the ranges described above.

- Rubber latex (C) -

The adhesive composition contains a rubber latex (C). It is possible to further improve adhesion between a rubber member and an organic fiber cord by providing the organic fiber cord with the adhesive composition containing the rubber latex by coating.

The rubber latex is obtained by dispersing fine particles of a rubber component into water or the like. A concentration of the rubber component in the rubber latex is preferably in the range of 10 to 60 mass % and more preferably in the range of 20 to 50 mass %.

Type of the rubber component of the rubber latex is not particularly restricted and examples of the rubber component which can be used include: natural rubber (NR); synthetic rubber such as isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene copolymer rubber (NBR), vinylpyridine-styrene-butadiene copolymer rubber (Vp); and the like. Either a single type or combination of two or more types as a blend, of these examples, may be used as the rubber component.

A content of the rubber latex (C) in the adhesive composition in terms of the solid content (i.e., the rubber component) mass ratio is preferably in the range of 30 to 90 mass %, more preferably in the range of 30 to 85 mass %, and still more preferably in the range of 40 to 85 mass %. An effect caused by the rubber latex (C) is made conspicuous when the content of the rubber latex (C) is set to be within the ranges described above.

In the adhesive composition for an organic fiber cord of the present disclosure, a content of the epoxy compound (A) therein is preferably in the range of 1 to 25 mass %, a content of the compound (B) having an amide group and an amino group therein is preferably in the range of 0.1 to 20 mass %, and a content of the rubber latex (C) therein is preferably in the range of 30 to 90 mass % in terms of solid content mass ratios, respectively. Adhesion can be further improved in this case.

- Isocyanate compound (D) -

The adhesive composition of the present disclosure preferably contains an isocyanate compound (D), as well, in addition to the epoxy compound (A), the compound (B) having an amide group and an amino group per molecule, and the rubber latex (C) described above. In a case where the adhesive composition contains an isocyanate compound, an adhesion property of the adhesive composition is significantly improved due to a synergistic effect caused by the isocyanate compound and the epoxy compound (A), the compound (B) having an amide group and an amino group therein, and the rubber latex (C).

In the present disclosure, the isocyanate compound represents a compound i) capable of causing an effect of facilitating adhesion of the adhesive composition to a resin material (e.g., an organic fiber cord) as a target to adhere to and ii) having an isocyanate group as a polar functional group.

The isocyanate compound (D), of which type is not particularly restricted, is preferably an (blocked) isocyanate group-including aromatic compound in terms of further improving adhesion. In a case where the adhesive composition contains an (blocked) isocyanate group-including aromatic compound, the (blocked) isocyanate group-including aromatic compound is distributed in the vicinity of an interface between the fiber as the target to adhere to and the adhesive

composition and effectively facilitates adhesion between the fiber and the adhesive composition. That is, adhesion between the organic fiber cord and the adhesive composition can be further improved by an adhesion-facilitating effect caused by the (blocked) isocyanate group-including aromatic compound.

The (blocked) isocyanate group-including aromatic compound described above represents an aromatic compound having an (blocked) isocyanate group therein. An "(blocked) isocyanate group" represents a blocked isocyanate group or an isocyanate group. Specifically, an "(blocked) isocyanate group" may represent, other than an isocyanate group, a blocked isocyanate group resulted from a reaction between an isocyanate group and a blocking agent for blocking the isocyanate group, an isocyanate group which has not reacted with the blocking agent, an isocyanate group appearing as a result of dissociation of the blocking agent from the blocked isocyanate group, or the like. The blocked isocyanate group, when it is heated, allows a portion thereof derived from the blocking agent to be dissociated therefrom, thereby generating (restoring) an active isocyanate group.

The (blocked) isocyanate group-including aromatic compound described above preferably has a molecular structure in which aromantic compounds are bonded to each other by an alkylene bond (chain) and more preferably has a molecular structure in which aromantic compounds are bonded to each other by a methylene bond. Examples of the molecular structure in which aromantic compounds are bonded to each other by an alkylene bond (chain) include molecular structures observed in diphenylmethane diisocyanate, polymethylene polyphenyl polyisocyanate, a condensate of a phenol and formaldehyde, and the like.

Examples of the aromatic compound having an (blocked) isocyanate group include: a compound having an aromatic polyisocyanate and a thermally dissociable blocking agent therein; a water-dispersible compound having therein a component obtained by blocking diphenylmethane diisocyanate or an aromatic polyisocyanate with a thermally dissociable blocking agent; an aqueous urethane compound; and the like.

Preferable examples of the compound having an aromatic polyisocyanate and a thermally dissociable blocking agent therein include a blocked isocyanate compound having diphenylmethane diisocyanate and a conventionally known isocyanate-blocking agent therein, and the like.

Examples of the water-dispersible compound having therein a component obtained by blocking diphenylmethane diisocyanate or an aromatic polyisocyanate with a thermally dissociable blocking agent include a reaction product obtained by blocking diphenylmethane diisocyanate or polymethylene polyphenyl polyisocyanate with a conventionally known blocking agent for blocking an isocyanate group. Specifically, a commercially available blocked polyisocyanate compound such as "ELASTRON BN69" manufactured by DKS Co., Ltd., "ELASTRON BN77" manufactured by DKS Co., Ltd., "MEIKANATE TP-10" manufactured by MEISEI CHEMICAL WORKS, LTD., and the like can be employed.

The aqueous urethane compound is obtained by causing following three components ($\alpha$), ($\beta$) and ($\gamma$) to react with each other: an organic polyisocyanate compound ($\alpha$) having a molecular structure in which aromantic compounds are bonded to each other by an alkylene bond (chain), preferably a molecular structure in which aromantic compounds are bonded to each other by a methylene bond; a compound ($\beta$) having a plurality of active hydrogens; and a thermally dissociable blocking agent ($\gamma$) for blocking an isocyanate group. The aqueous urethane compound as described above, having a flexible molecular structure, not only functions as an adhesion improver but also suppresses softening/fluidization of the adhesive at high temperature as a flexible (solid-phase) crosslinking agent.

In the present disclosure, the term "aqueous" represents a water-soluble or water dispersible state. Further, the term "water-soluble" does not necessarily represent full/complete solubility in water but may represent a partially water-soluble state or a state in which phase separation does not occur in an aqueous solution of the adhesive composition of the present disclosure.

In the present disclosure, preferable examples of the aqueous urethane compound include an aqueous urethane compound represented by general formula (1) shown below.

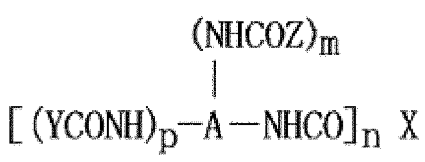

(1)

In general formula (1), "A" represents a residue resulting from dissociation of active hydrogen from an organic polyisocyanate compound ($\alpha$) having a molecular structure in which aromantic compounds are bonded to each other by an alkylene bond or chain; "Y" represents a residue resulting from dissociation of active hydrogen from a thermally dissociable blocking agent ($\gamma$) for blocking an isocyanate group; "Z" represents a residue resulting from dissociation of active hydrogen from a compound ($\delta$); "X" represents a residue resulting from dissociation of active hydrogen from a compound ($\beta$) having a plurality of active hydrogens; "n" represents an integer in the range of 2 to 4; and "p + m" represents an integer in the range of 2 to 4 ($m \geq 0.25$).

The aqueous urethane compound described above is regarded as the isocyanate compound (D) in the present disclosure because the aqueous urethane compound, when it is heated, allows a portion thereof derived from a blocking agent to be dissociated and thus regenerates an active isocyanate group.

The "organic polyisocyanate compound ($\alpha$)" of the "residue resulting from dissociation of active hydrogen from an organic polyisocyanate compound ($\alpha$)" as "A" in general formula (1) has aromatic rings therein. The presence of aromatic rings in the "aqueous urethane compound" facilitates dispersion of the aqueous urethane compound into spaces in polymer chains of a resin.

Examples of the organic polyisocyanate compound ($\alpha$) having a molecular structure in which aromantic compounds are bonded to each other by an alkylene bond or chain, although type of the organic polyisocyanate compound ($\alpha$) is not particularly restricted, include methylenediphenyl polyisocyanate, polyphenylenepolymethylene polyisocyanate (occasionally referred to as "polymethylenepolyphenyl polyisocyanate"), and the like. Polyphenylenepolymethylene polyisocyanate having the number average molecular weight of $\leq$ 6,000 is preferable and polyphenylenepolymethylene polyisocyanate having the number average molecular weight of $\leq$ 4,000 is particularly preferable as the organic polyisocyanate compound ($\alpha$) having a molecular structure in which aromantic compounds are bonded to each other by an alkylene bond or chain. The compound ($\beta$) having a plurality of active hydrogens is preferably a compound having 2 to 4 active hydrogen atoms and the average molecular weight of $\leq$ 5,000. Examples of the compound ($\beta$) as described above include (i) a polyhydric alcohol having 2 to 4 hydroxyl groups, (ii) a polyamine having 2 to 4 primary and/or secondary amino groups, (iii) an aminoalcohol having 2 to 4 primary and/or secondary amino groups and hydroxyl group(s), (iv) a polyester polyol having 2 to 4 hydroxyl groups, (v) a polybutadiene polyol having 2 to 4 hydroxyl groups, and a copolymer of the polybutadiene polyol and another vinyl monomer, (vi) a polychloroprene polyol having 2 to 4 hydroxyl groups, and a copolymer of the polychloroprene polyol and another vinyl monomer, and (vii) a polyether polyol having 2 to 4 hydroxyl groups, obtained, for example, by: a polyaddition reaction of $C_{2-4}$ alkylene oxides to a polyamine, a polyhydric phenol, an aminoalcohol as the polymerization initiator; a polyaddition reaction of $C_{2-4}$ alkylene oxides to a $C_{\geq 3}$ polyhydric alcohol as the polymerization initiator; copolymerization of $C_{2-4}$ alkylene oxides; and polymerization of $C_{3-4}$ alkylene oxides.

The thermally dissociable blocking agent ($\gamma$) for blocking an isocyanate group described above is a compound capable of releasing isocyanate group when it is subjected to a heat treatment. Examples of the thermally dissociable blocking agent ($\gamma$) include the conventionally known isocyanate-blocking agents.

The compound ($\delta$) described above is a compound having at least one active hydrogen atom, as well as an anionic hydrophilic group and/or a nonionic hydrophilic group. Examples of the compound having at least one active hydrogen atom, as well as an anionic hydrophilic group, include: aminosulfonic acid such as taurine, N-methyltaurine, N-butyltaurine, sulfanilic acid; aminocarboxylic acid such as glycine, alanine; and the like. Examples of the compound having at least one active hydrogen atom, as well as a nonionic hydrophilic group, include a compound having a hydrophilic polyether chain.

A content of the isocyanate compound (D) in the adhesive composition, which is not particularly restricted, is preferably in the range of 1 to 35 mass % and more preferably in the range of 2 to 30 mass % in terms of more reliably ensuring superior adhesion than otherwise.

It should be noted that the aforementioned content of the isocyanate compound (D) represents a relative mass value (a solid content mass ratio) thereof in a dry state.

- Urethane resin (E) -

It is preferable that the adhesive composition of the present disclosure contains an urethane resin (E) in addition to the epoxy compound (A), the compound (B) having an amide group and an amino group per molecule, and the rubber latex (C) described above. In a case where the adhesive composition contains an urethane resin (E), an adhesion property of the adhesive composition is significantly improved due to a synergistic effect caused by the urethane resin and the epoxy compound (A), the compound (B) having an amide group and an amino group therein, and the rubber latex (C). The urethane resin (E) may be used together with the isocyanate compound (D) described above.

The urethane resin (E) can be manufactured by causing a polyisocyanate to react with a polyol. In the present disclosure, the urethane resin (E) is distinguished from the isocyanate compound (D), in that the former or the urethane resin (E) does not have such a portion derived from a blocking agent as possessed by the blocked isocyanate group described above (it should be noted that the isocyanate compound (D) is preferably a blocked isocyanate group-including aromatic compound which, when it is heated, allows the portion derived from a blocking agent to be dissociated and thereby regenerates an active isocyanate group at the site).

Examples of the polyisocyanate described above include tolylene-2,4-diisocyanate, tolylene-2,6-diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, hexamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, lysine diisocyanate, isophorone diisocyanate, 4,4'-dicyclohexylmethane diisocyanate, triphenylmethane triisocyanate, toluene-2,4,6-triyl triisocyanate, and the like. Either a single type or combination of two or more types of these examples may be used as the polyisocyanate.

Examples of the polyol described above include polyether polyol, polyester polyol, polycarbonate polyol, polyacetal polyol, polyacrylate polyol, and the like. Examples of the polyether polyol include: an aliphatic diol such as ethylene glycol, 1,2-propanediol, 1,3-propanediol, 2-methyl-1,3-propanediol, 1,4-propanediol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, 1,10-decanediol, diethylene glycol, and triethylene glycol; an aliphatic diol such as cyclohexanedimethanol and cyclohexanediol; polyhydric alcohol having a hydricity of three or more, such as trimethylolethane, trimethylolpropane, hexitols, pentitols, glycerin, pentaerythritol, and tetramethylolpropane; polytetramethylene glycol; and the like. Examples of the polyester polyol include: a polyester obtained by a condensation reaction of i) a diol component such as ethylene glycol, propylene glycol, trimethylene glycol, tetramethylene glycol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, bis(hydroxyethoxy)benzene, 1,4-cyclohexanedimethanol, bisphenol A, bisphenol S, hydroquinone, or an alkylene oxide adduct thereof and ii) a polycarboxylic acid component such as malonic acid, succinic acid, adipic acid, pimelic acid, suberic acid, azelaic acid, sebacic acid, decanedicarboxylic acid, dodecanedicarboxylic acid, hexadecanedicarboxylic acid, maleic acid, fumaric acid, 1,3-cyclopentanedicarboxylic acid, phthalic acid, terephthalic acid, isophthalic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, trimellitic acid, trimesic acid, trimer of caster oil fatty acid, or an anhydride/ester-forming derivative thereof; a polyester obtained by a ring-opening polymerization reaction of a cyclic ester compound such as ε-caprolactone; a polyester obtained by copolymerization of the aforementioned compounds; and the like.

A chain extender may be used for adjusting physical properties such as mechanical properties, thermal properties, or the like of the urethane resin. Examples of the chain extender include a chain extender including a polyamine, a chain extender having active hydrogen, and the like.

Examples of the polyamine-based chain extender include: a diamine such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4' -dicyclohexylmethanediamine, 1,4' -cyclohexanediamine, hydroxymethylaminoethylamine, hydroxyethylaminoethylamine, hydroxypropylaminopropylamine, ethylaminoethylamine, methylaminopropylamine, diethylenetriamine, dipropylenetriamine, and triethylenetetramine; a hydrazine such as hydrazine, N,N'-dimethylhydrazine, and 1,6-hexamethylene-bis-hydrazine; a dihydrazide such as succinic dihydrazide, adipic dihydrazide, glutaric dihydrazide, sebacic dihydrazide, and isophthalic dihydrazide; a semicarbazide such as β-semicarbazide propionic acid hydrazide, 3-semicarbazide-propyl-carbazic acid ester, and semicabazide-3-semicarbazidemethyl-3,5,5-trimethylcyclohexane; and the like. Examples of the chain extender having active hydrogen include: a glycol such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; a phenol such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; water; and the like.

The urethane resin (E) preferably has cationicity. Examples of a method for introducing a cationic group into the urethane resin include: cationizing a tertiary amino group of a polyamine as a chain extender by neutralizing the tertiary amino group by an acid or quarternizing the tertiary amino group by a quarternizing agent; using, in preparation of the urethane (E), a polyol having a tertiary amino group in a side chain thereof and cationizing the tertiary amino group of the polyol by neutralizing the tertiary amino group by an acid or quarternizing the tertiary amino group by a quarternizing agent; and the like. In the case where a polyol having a tertiary amino group in a side chain thereof is used, another polyol not having a tertiary amino group may also be used in combination. Examples of the acid for use in neutralization of the tertiary amino group described above include: an organic acid such as formic acid, acetic acid, propionic acid, succinic acid, glutaric acid, butyric acid, lactic acid, malic acid, citric acid, tartaric acid, malonic acid, and adipic acid; an organic sulfonic acid such as sulfonic acid, p-toluenesulfonic acid, methanesulfonic acid, and hydroxymethanesulfonic acid; an inorganic acid such as hydrochloric acid, sulfuric acid, nitric acid, phosphoric acid, boric acid, phosphorus acid, and hydrofluoric acid; and the like. Either a single type or two or more types in combination, of these examples, may be used as the acid. Examples of the quarternizing agent which can be used for quarternizing the tertiary amino group described above include: a dialkyl sulfate such as dimethyl sulfate, diethyl sulfate; a halogenated alkyl such as methyl chloride, ethyl chloride, benzyl chloride, methyl bromide, ethyl bromide, benzyl bromide, methyl iodide, ethyl iodide, and benzyl iodide; methyl alkylsulfonate or methyl arylsulfonate such as methyl methanesulfonate, methyl p-toluenesulfonate; an epoxy such as ethylene oxide, propylene oxide, butylene oxide, styrene oxide, epichlorohydrin, allyl glycidyl ether, butyl glycidyl ether, 2-ethylhexyl glycidyl ether, and phenyl glycidyl ether; and the like.

A content of the urethane compound (E) in the adhesive composition, which is not particularly restricted, is preferably in the range of 5 to 35 mass % and more preferably in the range of 8 to 25 mass % in terms of more reliably ensuring superior adhesion than otherwise.
It should be noted that the aforementioned content of the urethane compound (E) represents a relative mass value (a solid content mass ratio) thereof in a dry state.

- Oxazoline group-containing compound (F) -

It is preferable that the adhesive composition of the present disclosure contains an oxazoline group-containing compound (F) in addition to the epoxy compound (A), the compound (B) having an amide group and an amino group per molecule, and the rubber latex (C) described above. The oxazoline group of the oxazoline group-containing compound (F) functions as a reactive group, thereby successfully realizing superior adhesion. In a case where the adhesive composition contains the oxazoline group-containing compound (F), adhesion property of the adhesive composition is significantly improved due to a synergistic effect caused by the oxazoline group-containing compound (F) and the epoxy compound (A), the compound (B) having an amide group and an amino group therein, and the rubber latex (C). The oxazoline group-containing compound (F) may be used together with the isocyanate compound (D) and/or the urethane resin (E) described above.
Examples of the oxazoline group-containing compound (F) include: a polymer obtained by graft polymerization of an ethylenic unsaturated monomer including an oxazaline group-containing ethylenic unsaturated monomer therein, onto a polyether having a structural unit derived from alkylene oxide; and the like. The oxazoline group-containing compound (F) can realize a high crosslinking efficiency and a high crosslinking density and is excellent in terms of workability and a low impact on the environment due to satisfactory water solubility thereof. In a case where the oxazoline group-containing compound (F) is used as a crosslinking agent, for example, the oxazoline group-containing compound (F) can realize superior softness, flexibility, and stretchability in a resulting crosslinked product.
The polyether described above is obtained by polymerization of alkylene oxide as a raw material monomer and therefore has a structural unit derived from alkylene oxide. Examples of the alkylene oxide include ethylene oxide, propylene oxide, styrene oxide, epichlorohydrin, allyl glycidyl ether, phenyl glycidyl ether, and the like. Either a single type or two or more types in combination, of these examples, may be used as the alkylene oxide. Ethylene oxide is particularly preferable as the alkylene oxide among the aforementioned examples thereof. That is, it is preferable that the alkylene oxide contains ethylene oxide as a main component thereof and further contains alkylene oxide of another type according to necessity. A content of ethylene oxide is preferably ≥ 50 mol % and more preferably ≥ 70 mol %, in this regard. A graft polymer which is excellent in hydrophilicity can be obtained when the content of ethylene oxide in the alkylene oxide is ≥ 50 mol %.
The number average molecular weight (Mn) of the polyether, which is not particularly restricted, is preferably ≥ 200. The upper limit of the number overage molecular weight of the polyether, which is not particularly restricted, either, is preferably ≤ 100,000. A graft polymer having a satisfactorily high molecular weight can be obtained as the oxazoline group-containing compound (F) when the number average molecular weight of the polyether is ≥ 200. It is possible to achieve satisfactorily high crosslinking density and satisfactorily good physical properties (resistance to solvent, resistance to water, and the like) by using as a crosslinking agent the graft polymer having a high molecular weight described above. A graft polymer of which viscosity is not too high and thus easy to handle in graft polymerization can be obtained as the oxazoline group-containing compound (F) when the number average molecular weight of the polyether is ≤ 100,000. Type of a method for obtaining the polyether described above is not particularly restricted and the polyether can be obtained by any appropriate known method.
Examples of the oxazaline group-containing ethylenic unsaturated monomer, of which type is not particularly restricted, include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, 2-isopropenyl-5-ethyl-2-oxazoline, and the like. Either a single type or two or more types in combination, of these examples, may be used as the oxazaline group-containing ethylenic unsaturated monomer. 2-isopropenyl-2-oxazoline is preferable, among the examples described above, because of its easy availability in the industry.
A content of the oxazaline group-containing ethylenic unsaturated monomer in the ethylenic unsaturated monomer is preferably ≥ 1 mass %, more preferably ≥ 10 mass %, and still more preferably ≥ 25 mass %. In a case where a content of the oxazaline group-containing ethylenic unsaturated monomer in the ethylenic unsaturated monomer is ≥ 1 mass %, the content of the oxazaline group in a resulting graft polymer is satisfactorily high, whereby it is possible to achieve satisfactorily high crosslinking density and satisfactorily good physical properties (resistance to solvent, resistance to water, and the like) by using the resulting graft polymer as a crosslinking agent.
Further, in the graft polymerization described above, a content of the ethylenic unsaturated monomer to be graft polymerized onto the polyether is preferably ≥ 10 parts by mass, more preferably ≥ 25 parts by mass, and still more preferably ≥ 50 parts by mass, with respect to 100 parts by mass of the polyether, without no particular restriction thereto.

In a case where the ethylenic unsaturated monomer is used by an amount of ≥ 10 parts by mass with respect to 100 parts by mass of the polyether, the content of the oxazaline group in a resulting graft polymer is satisfactorily high, whereby it is possible to achieve satisfactorily high crosslinking density and satisfactorily good physical properties (resistance to solvent, resistance to water, and the like) by using the resulting graft polymer as a crosslinking agent.

The number average molecular weight (Mn) of the oxazoline group-containing compound (F), which is not particularly restricted, is preferably in the specific range of 500 to 2,000,000 and more preferably in the specific range of 1,000 to 1,000,000, for example. The Mn of the oxazoline group-containing compound (F) of ≥ 500 ensures satisfactorily high crosslinking density when the oxazoline group-containing compound (F) is employed as a crosslinking agent and the Mn of the oxazoline group-containing compound (F) of ≤ 2,000,000 ensures not too high viscosity of a resulting graft polymer and thus easy handling thereof.

With respect to crosslinking reactions of the oxazoline group-containing compound (F), they can be carried out by a conventionally known method, without no particular restrictions thereto, either (1) in a case where the compound (F) itself functions as a crosslinking agent and crosslinks other polymers or the like or (2) in a case where the compound (F) itself is crosslinked by another crosslinking agent or the like.

The "other polymers" in the case (1) described above are preferably polymers each of which has a functional group reactive with oxazoline group (examples of such a functional group include carboxyl group, thiol group, amino group, acid anhydride group, and the like). Specifically, examples of a polymer having a functional group reactive with oxazoline group include: acryl-based resin such as acrylic resin, acryl silicone resin, acryl-based copolymer resin (acryl/styrene-based resin, or the like); polycondensation resin such as SBR (styrene/butadiene copolymer rubber), polyester resin, polyurethane resin, alkyd resin, polyamide resin, or the like; fluorine-containing resin; polyolefin; polychloroprene; polyacrlylic acid; polymethacrylic acid; and the like. The polymer may have either a single type or two or more types of functional group(s) reactive with oxazoline group.

Examples of "another crosslinking agent" in the case (2) described above include a carboxyl group-containing compound, an epoxy group-containing compound, a thiol group-containing compound, and the like.

A content of the oxazoline group-containing compound (F) in the adhesive composition, which is not particularly restricted, is preferably in the range of 2 to 35 mass % and more preferably in the range of 3 to 20 mass % in terms of more reliably ensuring superior adhesion than otherwise.

It should be noted that the aforementioned content of the oxazoline group-containing compound (F) represents a relative mass value (a solid content mass ratio) thereof in a dry state.

In a case where an adhesive composition for an organic fiber cord of the present disclosure contains at least one of the isocyanate compound (D), the urethane compound (E), and the oxazoline group-containing compound (F), it is preferable that: a content of the epoxy compound (A) is in the range of 1 to 35 mass %; a content of the compound (B) having an amide group and an amino group per molecule is in the range of 0. 1 to 35 mass %; a content of the rubber latex (C) is in the range of 30 to 90 mass %; and the total content of the isocyanate compound (D), the urethane compound (E), and the oxazoline group-containing compound (F) is in the range of 5 to 35 mass %, in terms of solid content mass ratios in the adhesive composition, respectively. Even better adhesion can be realized than otherwise in this case. In this regard, in a case where an adhesive composition for an organic fiber cord of the present disclosure contains at least one of the isocyanate compound (D), the urethane compound (E), and the oxazoline group-containing compound (F), it is more preferable that: a content of the epoxy compound (A) is in the range of 1 to 25 mass %; a content of the compound (B) having an amide group and an amino group per molecule is in the range of 0.1 to 20 mass %; a content of the rubber latex (C) is in the range of 30 to 85 mass %; and the total content of the isocyanate compound (D), the urethane compound (E), and the oxazoline group-containing compound (F) is in the range of 5 to 35 mass %, in terms of solid content mass ratios in the adhesive composition, respectively.

Particularly good adhesion can be realized in this case.

A method for manufacturing the adhesive composition of the present disclosure is not particularly restricted and examples thereof include mixing the raw materials such as the epoxy compound (A), the compound (B) having an amide group and an amino group per molecule, and the rubber latex (C) and aging the mixture.

The adhesive composition is used generally in a state of an aqueous solution and a solid content of the adhesive composition in the aqueous solution thereof is preferably in the range of 5 to 60 mass % and more preferably in the range of 10 to 50 mass %.

## < Rubber-organic fiber cord composite >

A rubber-organic fiber cord composite of the present disclosure has a rubber member and an organic fiber cord, wherein at least a portion of the organic fiber cord is coated with the adhesive composition for an organic fiber cord described above. The rubber-organic fiber cord composite of the present disclosure is excellent in adhesion between the rubber and the organic fiber cord and can be manufactured at high productivity. Further, the rubber-organic fiber cord composite of the present disclosure, using the adhesive composition described above, has a relatively low impact

on the environment.

Regarding the rubber-organic fiber cord composite, although it suffices to coat at least a portion of the organic fiber cord with the adhesive composition as described above, it is preferable to coat the entire surface of the organic fiber cord with the adhesive composition in terms of further improving adhesion between the rubber and the organic fiber cord.

A method for coating at least a portion of the organic fiber cord with the adhesive composition described above is not particularly restricted and examples thereof include immersion, painting, spray coating, and the like. In a case where the adhesive composition contains a solvent, the solvent can be removed by a drying treatment after coating.

Type of a material of the organic fiber cord is not particularly restricted and may be appropriately selected according to applications. Examples of the material of the organic fiber cord include: a fiber cord made of polyester such as polyethylene terephthalate (PET); a fiber cord made of aliphatic polyamide such as 6-nylon, 6,6-nylon, 4,6-nylon; a fiber cord made of polyketone; a fiber cord made of aromatic polyamide such as poly(p-phenylene terephthalamide); and a cellulose-based fiber cord such as rayon.

A configuration of the organic fiber cord is not particularly restricted and a monofilament and/or an organic fiber cord obtained by twisting a plurality of single fiber filaments can be used.

The adhesive composition of the present disclosure can enhance adhesion between a rubber member and a cord even when the composition is applied, by coating, to a polyester fiber cord which is generally expected to have poor adhesion with rubber.

A variety of rubber compositions (raw materials) containing at least a rubber component can be used for a rubber member of the rubber-organic fiber cord composite of the present disclosure. The rubber member, of the rubber-organic fiber cord composite, is preferably formed from a vulcanized rubber obtained by vulcanizing any of the variety of rubber compositions described above. Each of the rubber compositions can be manufactured by blending a rubber component composed of natural rubber and/or synthetic rubber (e.g., butadiene rubber, styrene-butadiene rubber, isoprene rubber, or the like) with a filler such as carbon black, silica; a crosslinking agent such as sulfur, peroxide; a crosslinking accelerator; and the like and then subjecting the blend to mixing and kneading, warming, extrusion, and the like.

The rubber-organic fiber cord composite of the present disclosure can be manufactured, for example, by: coating at least a portion of the organic fiber cord with the adhesive composition described above; covering the organic fiber cord thus coated with the adhesive composition, with a rubber composition in the unvulcanized state as a raw material of the rubber member described above, thereby preparing a unvulcanized rubber-organic fiber cord composite; and subjecting the unvulcanized rubber-organic fiber cord composite to vulcanization.

## < Tire >

A tire of the present disclosure characteristically includes the rubber-organic fiber cord composite described above. The tire of the present disclosure is excellent in adhesion between rubber and an organic fiber cord and can be manufactured at high productivity. Further, the tire, using the rubber-organic fiber cord composite treated with the adhesive composition described above, has a relatively low impact on the environment.

The rubber-organic fiber cord composite described above is applicable to, for example, a carcass, a belt, a belt-reinforcing layer, and a belt periphery-reinforcing layer such as a flipper strip in the tire of the present disclosure.

The tire of the present disclosure may be obtained by either i) molding a green tire by using an unvulcanized rubber composition and then subjecting the green tire to vulcanization or ii) molding a green tire by using a semi-vulcanized rubber prepared by a preliminary vulcanization process and then subjecting the green tire to main vulcanization, depending on the type of the intended tire. It suffices to employ the organic fiber cord treated with the adhesive composition described above in at least a portion of the tire of the present disclosure. In other words, any appropriate conventionally known members may be used for other structural members of the tire, with no particular restrictions thereto.

The tire of the present disclosure is preferably a pneumatic tire. Examples of gas with which the tire is to be inflated include inert gas such as nitrogen, argon, helium or the like, as well as ambient air and air of which oxygen partial pressure has been adjusted.

## EXAMPLES

The present disclosure will be described further in detail by Examples hereinafter. The present disclosure is not limited by any means to these Examples.

## < Organic fiber cord >

A polyester cord for a tire (made of polyethylene terephthalate (PET) and having a cord structure: 1,670 dtex/2

and the number of twists: 39 × 39/10 cm) was prepared.

< Preparation of adhesive composition >

Adhesive composition samples (aqueous solutions of adhesive compositions having predetermined solid contents) respectively having the formulations shown in Table 1 and Table 2 were prepared. Mechanical stability and storage stability of each of the adhesive composition samples were evaluated by the methods described below, respectively. The results are shown in Table 1 and Table 2.

(1) Mechanical stability (coagulation occurrence rate)

Mechanical stability (coagulation occurrence rate) of each of the adhesive composition samples for an organic fiber cord was measured according to the method shown in K6392-1995 by using a Maron mechanical stability tester for copolymer latex composition ("Maron stability tester No. 2312-II" manufactured by KUMAGAI RIKI Co., Ltd.).

In brief, a coagulation occurrence rate (%) of the adhesive composition sample (aqueous solution) for an organic fiber cord was determined by: applying shearing strain to the sample for 10 minutes under a condition of compression load: 10 kg and the number of revolutions: 1,000 r/minute by using a rotor of the Maron mechanical stability tester described above; measuring the mass of the coagulum generated as a result of the application of shearing stress to the sample; and calculating a coagulation occurrence rate (%) from the mass of the coagulum thus measured, according to the formula shown below.

$$\text{Coagulation occurrence rate (\%)} = \text{(mass, in dry state, of coagulum generated by shearing stress)/(mass of solid content in aqueous solution of adhesive composition sample)} \times 100$$

The smaller value of the coagulation occurrence rate represents the better mechanical stability of the adhesive composition.

(2) Storage stability

Each of the adhesive composition samples was stored in a thermostatic chamber at 27 °C and a time period taken for the adhesive composition sample to be cured was counted for evaluation. The evaluation criteria are as follows.

| | |
|---|---|
| ◎: | Time period taken for curing ≥ 7 days |
| ○: | 3 days ≤ Time period taken for curing < 7 days |
| Δ: | 1 day ≤ Time period taken for curing < 3 days |
| ×: | Time period taken for curing < 1 day |

< Treatment of cord with adhesive composition >

The polyester cord for a tire was immersed in each of the adhesive composition samples (aqueous solutions) for 1 minute and then pulled out, whereby the adhesion composition sample was attached to the cord. The cord having the adhesive composition sample attached thereon was dried at 180 °C for 1 minute and then subjected to a heat treatment at 240 °C for 2 minutes, with cord tension (1 to 2 kg/cord) applied to the cord, by using a heat treatment device.

< Preparation of rubber-organic fiber cord composite >

The cord treated with the adhesive composition sample was embedded into an unvulcanized rubber composition containing: a rubber component including natural rubber and styrene-butadiene copolymer; carbon black; and a crosslinking agent, whereby a rubber-organic fiber cord composite sample was prepared. The rubber-organic fiber cord composite sample was then vulcanized at 160 °C for 20 minutes under a pressurized condition (20 kgf/$cm^2$). Initial adhesion strength and heat-resistant adhesion strength of the rubber-organic fiber cord composite sample thus vulcanized was measured for evaluation. The results of the initial adhesion strength values of the Examples and the Comparative Examples are shown in Table 1 and Table 2.

(3) Initial adhesion strength

Initial adhesion strength of the rubber-organic fiber cord composite sample thus vulcanized was measured according to JIS K6301.

Table 1

| | | Comp. Example 1 | Example 1 | Example 2 | Example 3 | Example 4 |
|---|---|---|---|---|---|---|
| Respective components of solid content of adhesive composition (mass %) | Epoxy compound (A1) *1 | 11.0 | 11.0 | 11.0 | 11.0 | 11.0 |
| | Urethane resin (E1) *2 | 10.0 | 12.5 | 11.5 | 10.5 | - |
| | Oxazoline group-containing compound (F1) *3 | - | - | - | - | 10.5 |
| | Isocyanate compound (D1) *4 | 20.0 | 20.0 | 20.0 | 20.0 | 20.0 |
| | Isocyanate compound (D2) *5 | - | - | - | - | - |
| | Amine compound 1 *6 | 2.0 | - | - | - | - |
| | Amine compound 2 *7 | - | - | - | - | - |
| | Compound having amide group and amino group per molecule (B1) *8 | - | 0.5 | 1.5 | 3.0 | 3.0 |
| | Rubber latex (C1) *9 | 57.0 | 56.0 | 56.0 | 55.5 | 55.5 |
| | Rubber latex (C2) *10 | - | - | - | - | - |
| Solid content (mass %) of adhesive composition | | 15.0 | 15.0 | 15.0 | 15.0 | 15.0 |
| Evaluation results | Initial adhesion strength (N/cord) | 26.1 | 22.4 | 25.4 | 23.7 | 24.3 |
| | Mechanical stability (%) | 1.0 | 1.9 | 1.2 | 0.7 | 0.8 |
| | Storage stability | Δ | ◎ | ○ | ○ | ○ |

Table 2

| | | Comp. Example 2 | Example 5 |
|---|---|---|---|
| Respective components of solid content of adhesive composition (mass %) | Epoxy compound (A1) *1 | 8.0 | 8.0 |
| | Urethane resin (E1) *2 | - | - |
| | Oxazoline group-containing compound (F1) *3 | 5.0 | 5.0 |
| | Isocyanate compound (D1) *4 | - | - |
| | Isocyanate compound (D2) *5 | 2.5 | 2.5 |
| | Amine compound 1 *6 | - | - |
| | Amine compound 2 *7 | 2.0 | - |
| | Compound having amide group and amino group per molecule (Bl) *8 | - | 3.0 |
| | Rubber latex (C1) *9 | - | - |
| | Rubber latex (C2) *10 | 82.5 | 81.5 |
| Solid content (mass %) of adhesive composition | | 15.0 | 15.0 |
| Evaluation results | Initial adhesion strength (N/cord) | 27.5 | 27.1 |
| | Mechanical stability (%) | 1.8 | 0.8 |
| | Storage stability | Δ | ○ |

*1 Epoxy compound (A1): Product name "DENACOL EX614B" manufactured by Nagase ChemteX Corporation
*2 Urethane resin (E1): Product name "PASCOL NJ-1" manufactured by MEISEI CHEMICAL WORKS, LTD.
*3 Oxazoline-group containing compound (F1): Product name "EPOCROS 2030" manufactured by NIPPON SHOKUBAI CO., LTD.
*4 Isocyanate compound (D1): Product name "IL6" manufactured by EMS-Chemie Holding AG
*5 Isocyanate compound (D2): Product name "ELASTRON BN77" manufactured by DKS Co., Ltd.
*6 Amine compound 1: Piperazine (anhydride), manufactured by Tokyo Chemical Industry Co., Ltd.
*7 Amine compound 2: Polyethyleneimine, Product name "EPOMIN®P-1000" manufactured by NIPPON SHOKUBAI CO., LTD.
*8 Compound having amide group and amino group per molecule (B1): Poly(amidoamine) as a condensate of triethylenetetramine and dimer acid obtained from tall oil fatty acid, Product name "Tohmide TXS-53-C" manufactured by T & K TOKA CO., LTD. (active hydrogen equivalent weight (g/eq): 210)
*9 Rubber latex (C1): Vinylpyridine-styrene-butadiene copolymer rubber (Vp) latex, Product name "PYRATEX" manufactured by NIPPON A & L INC.
* 10 Rubber latex (C2): Vinylpyridine-styrene-butadiene copolymer rubber (Vp) latex used in Example 1 of WO-A1-97/013818, Product name "V0658" manufactured by JSR Corporation

It is understood from Table 1 and Table 2 that the adhesive compositions of Examples according to the present disclosure are unanimously excellent in both mechanical stability and storage stability, whereby it is possible to achieve satisfactorily high adhesion strength between an organic fiber cord and rubber by treating the cord with the adhesive compositions of the Examples.

INDUSTRIAL APPLICABILITY

According to the present disclosure, it is possible to provide an adhesive composition capable of realizing good adhesion even when neither resorcin nor formalin is included therein. Further, according to the present disclosure, it is possible to provide a rubber-organic fiber cord composite and a tire, which are excellent in adhesion between rubber and an organic fiber cord and make a low impact on the environment.

## Claims

1. An adhesive composition for an organic fiber cord, comprising therein:

   an epoxy compound (A);
   a compound (B) having an amide group and an amino group per molecule; and
   rubber latex (C).

2. The adhesive composition for an organic fiber cord of claim 1, wherein the rubber latex (C) includes at least one selected from the group consisting of natural rubber (NR), isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene copolymer rubber (NBR), and vinylpyridine-styrene-butadiene copolymer rubber (Vp).

3. The adhesive composition for an organic fiber cord of claim 1 or 2, wherein the compound (B) having an amide group and an amino group therein is poly(amidoamine).

4. The adhesive composition for an organic fiber cord of any of claims 1 to 3, wherein the compound (B) having an amide group and an amino group therein is a condensate of polyamine and dimer acid obtained from unsaturated fatty acid.

5. The adhesive composition for an organic fiber cord of any of claims 1 to 4, wherein the compound (B) having an amide group and an amino group therein is poly(amidoamine) as a condensate of polyamine and dimer acid obtained from tall oil fatty acid.

6. The adhesive composition for an organic fiber cord of any of claims 1 to 5, wherein the compound (B) having an amide group and an amino group therein is poly(amidoamine) as a condensate of triethylenetetramine and dimer acid obtained from tall oil fatty acid.

7. The adhesive composition for an organic fiber cord of any of claims 1 to 6, further comprising an isocyanate compound (D).

8. The adhesive composition for an organic fiber cord of claim 7, wherein the isocyanate compound (D) is an (blocked) isocyanate group-including aromatic compound.

9. The adhesive composition for an organic fiber cord of any of claims 1 to 8, further comprising an urethane resin (E).

10. The adhesive composition for an organic fiber cord of any of claims 1 to 9, further comprising an oxazoline group-containing compound (F).

11. The adhesive composition for an organic fiber cord of any of claims 1 to 10, wherein a content of the epoxy compound (A) is in the range of 1 to 25 mass %, a content of the compound (B) having an amide group and an amino group per molecule is in the range of 0.1 to 20 mass %, and a content of the rubber latex (C) is in the range of 30 to 90 mass %, in terms of solid content mass ratios in the adhesive composition, respectively.

12. The adhesive composition for an organic fiber cord of any of claims 7 to 10, wherein the adhesive composition includes therein at least one of the isocyanate compound (D), the urethane compound (E), and the oxazoline group-containing compound (F), and
    a content of the epoxy compound (A) is in the range of 1 to 35 mass %, a content of the compound (B) having an amide group and an amino group per molecule is in the range of 0.1 to 35 mass %, a content of the rubber latex (C) is in the range of 30 to 90 mass %, and the total content of the isocyanate compound (D), the urethane compound (E), and the oxazoline group-containing compound (F) is in the range of 5 to 35 mass %, in terms of solid content mass ratios in the adhesive composition, respectively.

13. A rubber-organic fiber cord composite, comprising a rubber member and an organic fiber cord,
    wherein at least a portion of the organic fiber cord is coated with the adhesive composition for an organic fiber cord of any of claims 1 to 12.

**14.** A tire, including therein the rubber-organic fiber cord composite of claim 13.

## INTERNATIONAL SEARCH REPORT

International application No. PCT/JP2021/016853

**A. CLASSIFICATION OF SUBJECT MATTER**

Int.Cl. C09J107/02(2006.01)i, C09J109/00(2006.01)i, C09J109/08(2006.01)i, C09J163/00(2006.01)i, C09J175/04(2006.01)i, D06M13/395(2006.01)i, D06M15/37(2006.01)i, D06M15/55(2006.01)i, D06M15/564(2006.01)i, D06M15/59(2006.01)i, D06M15/693(2006.01)i, B60C9/00(2006.01)i
FI: C09J163/00, B60C9/00A, D06M15/55, D06M15/693, D06M13/395, D06M15/564, D06M15/37, D06M15/59, C09J107/02, C09J109/00, C09J109/08, C09J175/04

According to International Patent Classification (IPC) or to both national classification and IPC

**B. FIELDS SEARCHED**

Minimum documentation searched (classification system followed by classification symbols)
Int.Cl. C09J107/02, C09J109/00, C09J109/08, C09J163/00, C09J175/04, D06M13/395, D06M15/37, D06M15/55, D06M15/564, D06M15/59, D06M15/693, B60C9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2010/125992 A1 (BRIDGESTONE CORPORATION) 04 November 2010 (2010-11-04), claims 1-12, paragraphs [0035]-[0038] | 1-14 |
| Y | 原修, エポキシ樹脂の硬化剤, スリーボンド・テクニカルニュース, 32, スリーボンド・テクニカルニュース編集委員会, 20 December 1990, 1-10, p. 4, ll. 8, 9, (HARA, Osamu, Hardeners for epoxy resins, Three Bond Technical News), non-official translation (Three Bond Technical News Editorial Board) | 1-14 |
| Y<br>A | JP 2013-64037 A (BRIDGESTONE CORPORATION) 11 April 2013 (2013-04-11), claims 1-11, paragraph [0012] | 10<br>1-9, 11-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 June 2021 | 15 June 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/016853

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-265906 A (HITACHI KASEI POLYMER CO., LTD.) 18 September 2002 (2002-09-18), entire text, all drawings | 1-14 |
| A | JP 2000-336333 A (THREE BOND CO., LTD.) 05 December 2000 (2000-12-05), entire text, all drawings | 1-14 |

Form PCT/ISA/210 (second sheet) (January 2015)

**INTERNATIONAL SEARCH REPORT**
Information on patent family members

International application No.
PCT/JP2021/016853

| | | |
|---|---|---|
| WO 2010/125992 A1 | 04 November 2010 | US 2012/0041113 A1<br>claims 1-12, paragraphs [0040]-[0043]<br>EP 2426253 A1<br>CN 102414362 A<br>KR 10-2012-0023706 A |
| JP 2013-64037 A | 11 April 2013 | (Family: none) |
| JP 2002-265906 A | 18 September 2002 | (Family: none) |
| JP 2000-336333 A | 05 December 2000 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58002370 A
- JP 60092371 A
- JP 60096674 A
- JP 63249784 A
- JP 63061433 B
- JP 2010255153 A
- WO 97013818 A1